# EUROPÄISCHE PATENTSCHRIFT

(11) **EP 4 049 099 B1**
(45) Veröffentlichungstag und Bekanntmachung des Hinweises auf die Patenterteilung: **04.09.2024**
(21) Anmeldenummer: 20799615.8
(22) Anmeldetag: 21.10.2020
(51) Int. Cl.: G05B 19/042

(54) **VERFAHREN ZUM BETREIBEN EINER VERFAHRENSTECHNISCHEN ANLAGE UND VERFAHRENSTECHNISCHE ANLAGE**
METHOD FOR OPERATING A PROCESS ENGINEERING SYSTEM, AND PROCESS ENGINEERING SYSTEM
PROCÉDÉ DE FONCTIONNEMENT D'UN SYSTÈME D'INGÉNIERIE DE PROCESSUS ET SYSTÈME D'INGÉNIERIE DE PROCESSUS

(30) Priorität: 24.10.2019 EP 19020598
(43) Veröffentlichungstag der Anmeldung: 31.08.2022
(73) Patentinhaber: Linde GmbH, 82049 Pullach (DE)
(72) Erfinder: BURMBERGER, Stephan, 82377 Penzberg (DE); RATH, Stefan, 85298 Scheyern (DE)
(86) Internationale Anmeldenummer: PCT/EP2020/025467
(87) Internationale Veröffentlichungsnummer: WO 2021/078411

(56) Entgegenhaltungen:
- EP-A1- 3 220 221
- WO-A1-2019/096545
- US-A1- 2012 048 388
- US-A1- 2012 227 983

## Beschreibung

Die Erfindung betrifft ein Verfahren zum Betreiben einer verfahrenstechnischen Anlage, ein Steuerungs- und Regelsystem für eine verfahrenstechnische Anlage und eine verfahrenstechnische Anlage

### Stand der Technik

Als verfahrenstechnische Anlagen werden üblicherweise Anlagen zur Durchführung von Stoffänderungen und/oder Stoffumsetzungen mit Hilfe zweckgerichteter physikalischer und/oder chemischer und/oder biologischer und/oder nuklearer Wirkungsabläufe verstanden. Solche Änderungen und Umsetzungen umfassen typischerweise Zerkleinern, Sieben, Mischen, Wärmeübertragen, Rektifizieren, Kristallisieren, Trocknen, Abkühlen, Abfüllen und überlagerte Stoffumwandlungen, wie chemische, biologische oder nukleare Reaktionen.

Eine verfahrenstechnische Anlage wie beispielsweise eine Luftzerlegungsanlage ist typischerweise eine sehr komplexe Anlage, bei der viele verschiedene Prozessparameter eingestellt und/oder geregelt werden müssen. Hierzu können beispielsweise sog. SPS-Systeme (wobei SPS für "Speicherprogrammierbare Steuerung steht, der englische Begriff hierfür ist PLC bzw. "Programmable Logic Control") verwendet werden, wobei es sich dabei um elektronische Systeme handelt. Als Prozessparameter werden dann beispielsweise Drücke, Temperaturen, Flüsse, verschiedene Pegel oder Zusammensetzungen und dergleichen eingestellt bzw. geregelt.

Eine andere Art von elektronische Systemen können sog. SIS-Systeme (wobei SIS für "Safety Integrated Systems" steht) sein, mit denen Schäden an der verfahrenstechnischen Anlage oder Teilen davon vermieden werden können, wenn eines der vorstehend erwähnten SPS-Systeme eine Fehlfunktion hat oder wenn versehentlich ein Fehlbetrieb verursacht wird. Ein solches SIS-System weist üblicherweise einen Sensor, eine Logik und ein ausführendes Element bzw. einen Aktor auf. Wenn mittels des Sensors ein Fehler bzw. eine Fehlfunktion erkannt wird, wird über die Logik das ausführende Element dazu angesteuert, die Anlage bzw. einen Teil davon in einen sicheren Zustand zu bringen.

Die Dokumente EP 3 220 221 A1 und US 2012/227983 A1 offenbaren ein Verfahren bzw. Betätigungssystem zum Betreiben einer verfahrenstechnischen Anlage gemäß dem Oberbegriff der unabhängigen Ansprüche 1 und 6.

Hinsichtlich einer in letzter Zeit steigenden Wahrscheinlichkeit von sog. Hacker-Angriffen oder auch Cyber-Attacken kann sich bei solchen verfahrenstechnischen Anlagen, die immer mehr gesteuerte bzw. geregelte Prozesse bzw. Komponenten aufweisen, ein gewisses Sicherheitsproblem ergeben.

Die vorliegende Erfindung stellt sich vor diesem Hintergrund die Aufgabe, den Betrieb einer verfahrenstechnischen Anlage zu verbessern, insbesondere sicherer zu machen.

### Offenbarung der Erfindung

Diese Aufgabe wird durch ein Verfahren zum Betreiben einer verfahrenstechnischen Anlage gemäß Anspruch 1, ein Betätigungssystem gemäß Anspruch 6 und eine verfahrenstechnische Anlage gemäß Anspruch 11 gelöst. Ausgestaltungen sind Gegenstand der abhängigen Patentansprüche sowie der nachfolgenden Beschreibung.

### Vorteile der Erfindung

Die vorliegende Erfindung betrifft ein Verfahren zum Betreiben einer verfahrenstechnischen Anlage bei der extern, beispielsweise elektronisch oder elektrisch, angesteuerte und mittels eines unter Druck stehenden Betriebsfluids aktorisch Betätigungseinheiten zum Steuern und/oder Regeln und/oder Überwachen von Prozessparametern verwendet werden, die jeweils dazu eingerichtet sind, bei Ausbleiben einer hinreichenden Versorgung mit dem Betriebsfluid einen sicheren Zustand einzunehmen. Bei solchen Betätigungseinheiten kann es sich beispielsweise um Ventile handeln, deren Ventilkolben im Sinne eines Aktors mittels des unter Druck stehenden Betriebsfluids - hierbei handelt es sich insbesondere um Luft oder auch sog. Instrumentenluft - bewegt bzw. betätigt werden. Die Freigabe einer solchen Bewegung bzw. Betätigung des Ventilkolbens oder allgemein des Aktors hingegen erfolgt mittels externer Ansteuerung z.B. elektrisch oder elektronisch. Daneben gibt es auch Betätigungseinheiten oder Ventile, die weder Steuern noch Regeln, sondern lediglich zur Überwachung dienen. Zu diesen Ventilen gehört z.B. ein sog. ESD oder auch ein HIPPs-System. Diese Ventile haben nur die Aufgabe, im Notfall (z.B. Brandfall) zu schließen (und damit betätigt zu werden). Solche Betätigungseinheiten oder auch Steuer- und/oder Regel- und/oder Überwachungseinheiten ermöglichen einerseits eine einfache und schnelle Ansteuerung mittels externer Signale, allerdings auch eine schnelle Betätigung des Aktors, auch bei höheren Kräften, die zur Bewegung bzw. Betätigung des Aktors nötig sind.

Solche Betätigungseinheiten sind dabei typischerweise dazu eingerichtet bzw. derart ausgebildet, dass sie bei Ausbleiben einer hinreichenden Versorgung mit dem Betriebsfluid (sei es ein zu geringer Druck und/oder eine zu geringe Menge an Betriebsfluid) einen sicheren Zustand einzunehmen. Unter einer hinreichenden Versorgung mit dem Betriebsfluid ist dabei insbesondere ein Mindestwert eines Drucks und/oder einer Menge an Betriebsfluid zu verstehen, mit dem die Betätigung des Aktors ohne Probleme möglich ist. Entsprechend bedeutet ein Ausbleiben einer hinreichenden Versorgung mit dem Betriebsfluid, dass der Druck bzw. die Menge des Betriebsfluids nicht mehr ausreicht, den Aktor (problemlos) zu bewegen. Typischerweise gibt es hierfür bestimmte Grenzwerte für Druck bzw. Menge des Betriebsfluids. Ein einfaches Beispiel ist ein Ventil als Betätigungseinheit, das nur bei ausreichend anliegendem Druck offen steht, bei zu geringem Druck hingegen (automatisch) schließt. In diesem Zusammenhang wird auch von einer sog. "Fail-Safe-Position" gesprochen, die die Betätigungseinheit im Fehlerfall einnimmt, um etwaige Schäden zu verhindern.

Es werden nun mehrere der Betätigungseinheiten über eine Versorgungsleitung zwischen einer gemeinsamen Versorgungseinheit und den mehreren Betätigungseinheiten mit dem Betriebsfluid versorgt. Bei einer solchen Versorgungseinheit kann es sich beispielsweise um einen Verdichter oder Kompressor handeln, der die Luft bzw. Instrumentenluft mit einem bestimmten Druck und/oder eine bestimmten Menge (pro Zeiteinheit) bereitstellt. Mittels der Verbindungsleitung sind die einzelnen Betätigungseinheiten dann an die (gemeinsame) Versorgungseinheit angebunden. Es versteht sich, dass hierzu die einzelnen Betätigungseinheiten auch über weitere Leitungen an eine Haupt-Verbindungsleitung angeschlossen sein können. Die konkrete Verlegung der Verbindungsleitung (oder Verbindungsleitungen) hängt letztlich von der konkreten Anwendung und Positionierung Betätigungseinheiten ab.

Weiterhin wird dann bei Bedarf die Versorgung der mehreren Betätigungseinheiten mit dem Betriebsfluid aktiv zumindest so weit reduziert oder unterbunden, dass diese jeweils den sicheren Zustand einnehmen. Mit anderen Worten wird also die "Fail-Safe-Position" der Betätigungseinheiten, die eigentlich für den Fall einer Fehlfunktion oder eines Fehlbetriebs vorgesehen ist, aktiv - also gewollt - herbeigeführt, in dem die Versorgung der Betätigungseinheiten mit dem Betriebsfluid unterbunden oder zumindest hinreichend weit reduziert wird.

Im Falle eines Hackerangriffs, bei dem eine fremde und unbefugte Person letztlich die Kontrolle über eine oder mehrere in einer solchen verfahrenstechnischen Anlage vorhandenen Betätigungseinheiten erlangen kann, kann die verfahrenstechnische Anlage durch das vorgeschlagene Vorgehen besonders einfach und schnell in einen sicheren Zustand gebracht werden, sodass Schäden vermieden oder zumindest eingedämmt werden können. Dadurch, dass mehrere der Betätigungseinheiten gleichzeitig in den sicheren Zustand gebracht werden können, sind insgesamt wenige Stellen nötig, an denen auch an großen Anlagen entsprechend eingegriffen werden muss. Hierzu sei angemerkt, dass die Betätigungseinheiten, die durch einen HackerAngriff bewusst falsch angesteuert werden, nicht mit denjenigen Betätigungseinheiten identisch sein müssen, bei welchen das Betriebsfluid reduziert wird, um einen sicheren Zustand einzunehmen. Insbesondere können durch das vorgeschlagene Verfahren mehrere Betätigungseinheiten, aber im Extremfall auch alle Betätigungseinheiten einer Anlage in den sicheren Zustand gebracht werden.

Im Falle eines Hacker-Angriffs kann/können die unbefugte Person(en) auch die Kontrolle über ein vorstehend erwähntes SIS-System erlangen und so das SIS-System (partiell) außer Funktion setzen. So könnte der ungewollte Betriebszustand beispielsweise auch durch eine manuelle Fehlbedingung eines Operators und einem Nicht-Ansprechen des SIS-Systems (weil es gehackt wurde) hervorgerufen worden sein. Das vorgeschlagene Verfahren kann auch hierfür eingesetzt werden, indem entsprechende Sensoren und Logik beispielsweise als hart-verdrahtete Lösung ausgeführt werden.

Generell können die in dem vorgeschlagenen Verfahren verwendeten Betätigungseinheiten nicht nur (einzelne) Steuer- bzw. Regeleinheiten betreffen, sondern auch Betätigungs- oder Überwachungssysteme oder Schalt-Armaturen, z.B.

Ventile eine SIS-Systems oder andere Schalt-Armaturen wie Kickback-Armaturen an Verdichtern oder ESD-Ventile).

Eine solche Reduzierung der Versorgung der mehreren Betätigungseinheiten mit dem Betriebsfluid ist beispielsweise manuell möglich, beispielsweise mittels eines einfachen, von einem Bediener zu betätigenden Knopfes, es ist aber auch denkbar, dies automatisiert durchzuführen. Denkbar ist z.B. eine separate, elektrisch oder elektronisch angesteuerte Einrichtung - im Sinne einer Auslöseeinheit -, auf die von außen bei z.B. einen Hackerangriff nicht zugegriffen werden kann und mit der eine solche Reduzierung gezielt herbeigeführt werden kann.

Weiterhin sei erwähnt, dass im Rahmen der vorliegenden Erfindung unter einer verfahrenstechnischen Anlage jede Art von Anlage verstanden werden kann, bei der Prozessparameter bzw. Prozesse mit entsprechenden Steuer- und/oder Regeleinheiten gesteuert bzw. geregelt werden. Insofern kann es sich auch nur um einen Teil oder eine Einheit einer übergeordneten Anlage handeln.

Vorzugsweise wird eine aktiv betätigbare Reduzier- oder Absperreinrichtung in der Versorgungsleitung vorgesehen, um bei Bedarf die Versorgung der mehreren Betätigungseinheiten mit dem Betriebsfluid aktiv zu reduzieren. Es versteht sich, dass die Reduzier- oder Absperreinrichtung hierzu an einer Position angeordnet sein sollte, der sämtliche Betätigungseinheiten, deren Versorgung unterbunden werden soll, nachgeordnet sind. Bei der Reduzier- oder Absperreinrichtung kann es sich beispielsweise um ein Reduzier- oder Absperrventil in der Versorgungsleitung handeln. Ein solches kann beispielsweise elektrisch oder elektronisch betätigbar sein, denkbar ist ein sog. Magnetventil. Hierbei wurde erkannt, dass durch eine solche, an sich einfache Absperreinrichtung, besonders einfach und schnell eine Sicherheit gegen Hackerangriffe erlangt werden kann, während solche Absperreinrichtungen in Verbindungsleitungen für Betriebsfluid bzw. Instrumentenluft bisher nicht verwendet wurden.

Vorteilhafterweise wird die Versorgungsleitung derart ausgebildet, dass, ggf. auch erst nach Aktivierung der Reduzier- oder Absperreinrichtung, eine maximal (noch) durch die Versorgungsleitung führbare Menge an Betriebsfluid einen Versorgungsbedarf der mehreren Betätigungseinheiten um nicht mehr als einen vorgegebenen Wert, beispielsweise 10% oder 25%, übersteigt. Unter einem Versorgungsbedarf ist dabei insbesondere eine Menge (mit einem bestimmten Druck) an Betriebsfluid zu verstehen, mit dem die mehreren Betätigungseinheiten (gerade noch) ordnungsgemäß funktionieren, ggf. auch bei Spitzenbelastung. Die maximal durch die Versorgungsleitung führbare Menge an Betriebsfluid kann dann beispielsweise auf diese, dem Versorgungsbedarf (oder Maximalversorgungsbedarf) entsprechende Menge eingestellt werden, zweckmäßig ist aber eine etwas höhere Menge, bei der ein Sicherheitspuffer berücksichtigt ist. Auf diese Weise kann die Reduzierung der Versorgung der mehreren Betätigungseinheiten mit dem Betriebsfluid besonders schnell erfolgen, da ohnehin kein unnötig hoher Druck bzw. keine unnötig hohe Menge an Betriebsfluid in der Verbindungsleitung, insbesondere im Bereich vor den Betätigungseinheiten vorhanden ist. Die Reduzierung kann dabei im einfachsten Fall durch Abschalten der Versorgungseinheit erfolgen, zweckmäßig ist aber auch eine zusätzliche Maßnahme wie später noch näher erläutert.

Um die maximal in der Versorgungsleitung führbare Menge an Betriebsfluid entsprechend zu begrenzen, wird die Versorgungsleitung erfindungsgemäß, zumindest in einem gewissen Bereich, entsprechend ausgebildet, beispielsweise durch Verwendung entsprechend (gering) dimensionierter Rohre. Es wird erfindungsgemäß auch eine Mengenbegrenzungseinrichtung in der Versorgungsleitung vorgesehen, die derart ausgebildet ist, dass die maximal durch die Versorgungsleitung führbare Menge an Betriebsfluid den Versorgungsbedarf um nicht mehr als den vorgegebenen Wert übersteigt. Bei einer solchen Mengenbegrenzungseinrichtung, die auch besonders einfach nachträglich in eine bestehende Versorgungsleitung eingebracht werden kann, kann es sich beispielsweise um einen Lochscheibe oder eine andere Reduziereinheit handeln.

Weiterhin ist es bevorzugt, wenn eine aktiv betätigbare Druckreduziereinrichtung an der Versorgungsleitung vorgesehen wird, um bei Bedarf die Versorgung der mehreren Betätigungseinheiten mit dem Betriebsfluid aktiv zu reduzieren. Bei einer solchen aktiv betätigbaren Druckreduziereinrichtung kann beispielsweise Betriebsfluid aus der Verbindungsleitung abgelassen werden. In einem einfachen Fall kann beispielsweise ein (einfaches) Ventil verwendet werden, das bei Bedarf geöffnet wird. Damit kann eine Reduzierung der Versorgung der mehreren Betätigungseinheiten mit dem Betriebsfluid besonders einfach und schnell erfolgen.

Besonders zweckmäßig und effektiv ist es, wenn eine solche aktiv betätigbare Druckreduziereinrichtung in Kombination mit der aktiv betätigbaren Reduzier- oder Absperreinrichtung oder der Mengenbegrenzungseinrichtung vorgesehen wird. Dann sollte die aktiv betätigbare Druckreduziereinrichtung zweckmäßigerweise an der Versorgungsleitung stromabwärts der aktiv betätigbaren Reduzier- oder Absperreinrichtung bzw. der Mengenbegrenzungseinrichtung vorgesehen werden. Gegenstand der Erfindung ist weiterhin ein Betätigungssystem für eine verfahrenstechnische Anlage, mit mehreren extern ansteuerbaren und mittels eines unter Druck stehenden Betriebsfluids aktorisch betreibbaren Betätigungseinheiten zum Steuern und/oder Regeln und/oder Überwachen von Prozessparametern der verfahrenstechnischen Anlage, die jeweils dazu eingerichtet sind, bei Ausbleiben einer hinreichenden Versorgung mit dem Betriebsfluid einen sicheren Zustand einzunehmen, mit einer Versorgungseinheit und einer Versorgungsleitung zwischen der Versorgungseinheit und den mehreren Betätigungseinheiten zur Versorgung mit dem Betriebsfluid, wobei das Betätigungssystem derart ausgebildet ist, dass bei Bedarf die Versorgung der mehreren Steuer- und/oder Regel- oder auch Überwachungseinheiten mit dem Betriebsfluid aktiv zumindest so weit reduzierbar ist, dass diese jeweils den sicheren Zustand einnehmen.

Vorzugsweise weist das Betätigungssystem eine aktiv betätigbare Reduzier- oder Absperreinrichtung auf, die in der Versorgungsleitung vorgesehen und dazu eingerichtet ist, bei Bedarf die Versorgung der mehreren Betätigungseinheitenmit dem Betriebsfluid aktiv zu reduzieren oder zu unterbinden.

Erfindungsgemäß ist die Versorgungsleitung derart ausgebildet, dass eine maximal durch die Versorgungsleitung führbare Menge an Betriebsfluid einen Versorgungsbedarf der mehreren Betätigungseinheiten um nicht mehr als einen vorgegebenen Wert übersteigt. Insbesondere ist hierzu eine Mengenbegrenzungseinrichtung in der Versorgungsleitung vorgesehen.

Es ist von Vorteil, wenn das Betätigungssystem eine aktiv betätigbare Druckreduziereinrichtung aufweist, die an der Versorgungsleitung vorgesehen und dazu eingerichtet ist, bei Bedarf die Versorgung der mehreren Betätigungseinheiten mit dem Betriebsfluid aktiv zu reduzieren. Diese Druckreduziereinrichtung ist zweckmäßigerweise an der Versorgungsleitung stromabwärts der aktiv betätigbaren Reduzier- oder Absperreinrichtung bzw. der Mengenbegrenzungseinrichtung vorgesehen.

Das Betätigungssystem ist dabei insbesondere auch dazu eingerichtet, ein erfindungsgemäßes Verfahren durchzuführen.

Gegenstand der Erfindung ist weiterhin eine verfahrenstechnische Anlage mit einem erfindungsgemäßen Betätigungssystem.

Hinsichtlich weiterer Vorteile sowie näherer Erläuterungen des Betätigungssystems sowie der verfahrenstechnischen Anlage sei zur Vermeidung von Wiederholungen auf obige Ausführungen zum Verfahren verwiesen, die hier entsprechend gelten.

Kurze Beschreibung der Zeichnung
- Figur 1: zeigt schematisch eine erfindungsgemäße verfahrenstechnische Anlage in einer bevorzugten Ausführungsform.
- Figur 2: zeigt schematisch einen Ablauf eines erfindungsgemäßen Verfahrens in einer bevorzugten Ausführungsform.
- Figur 3: zeigt schematisch eine erfindungsgemäße verfahrenstechnische Anlage in einer weiteren bevorzugten Ausführungsform.
- Figur 4: zeigt schematisch eine erfindungsgemäße verfahrenstechnische Anlage in einer weiteren bevorzugten Ausführungsform.

### Ausführliche Beschreibung der Zeichnung

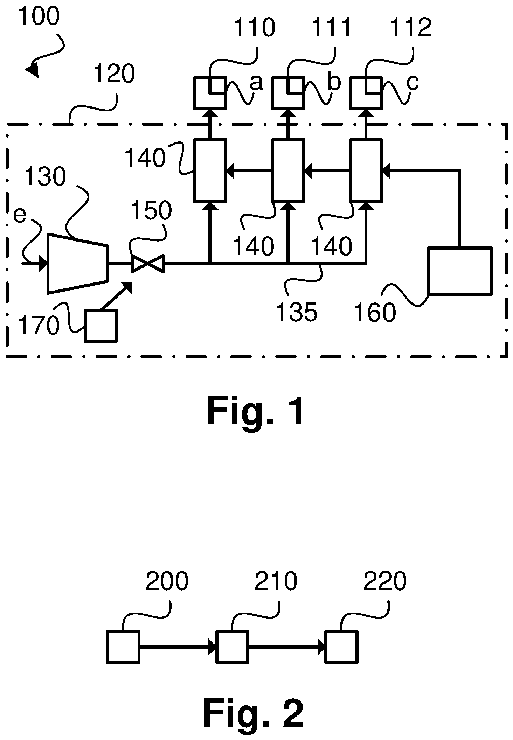

In Figur 1 ist schematisch eine erfindungsgemäße verfahrenstechnische Anlage 100 in einer bevorzugten Ausführungsform dargestellt, bei der ein erfindungsgemäßes Verfahren durchführbar ist. Bei der verfahrenstechnischen Anlage 100 kann es sich beispielsweise um eine Luftzerlegungsanlage oder einen Teil bzw. eine Einheit davon handeln. Wie jedoch schon erwähnt, ist die konkrete Art oder Größe der verfahrenstechnischen Anlage für die vorliegende Erfindung nicht relevant.

Es sollte jedoch mehrere, ggf. auch verschiedene, Prozesse geben, bei denen Prozessparameter gesteuert und/oder geregelt und/oder überwacht werden. Beispielhaft sind für die verfahrenstechnische Anlage 100 drei Prozesse 110, 111 und 112 gezeigt, bei denen jeweils ein Prozessparameter zu steuern, zu regeln oder zu überwachen ist, welche beispielhaft mit a, b und c bezeichnet sind.

Zum Steuern, Regeln bzw. Überwachen dieser Prozessparameter a, b und c ist ein Betätigungssystem 120 vorgesehen, das entsprechend und beispielhaft drei Betätigungseinheiten 140 aufweist, wobei jeweils eine der Betätigungseinheiten 140 zum Steuern, Regeln oder Überwachen eines der Prozessparameter a, b und c vorgesehen ist und verwendet wird. Es versteht sich, dass die einzelnen Betätigungseinheiten 140 unterschiedlich ausgebildet sein können und insbesondere speziell auf den jeweils betreffenden Prozess bzw. Prozessparameter abgestimmt sein können, auch wenn hier beispielhaft gleiche Bezugszeichen verwendet werden.

Weiterhin weist das Betätigungssystem 120 eine beispielhaft als Verdichter ausgebildete Versorgungseinheit 130 zur Versorgung der Einheiten 140 mit einem z.B. als Instrumentenluft ausgebildeten Betriebsfluid e auf. Die Instrumentenluft e wird dem Verdichter 130 zugeführt bzw. von diesem angesaugt, verdichtet und dann über eine - mit entsprechenden Abzweigungen versehene - Versorgungsleitung 135 den Einheiten 140 zugeführt.

Weiterhin weist das Überwachungssystem 120 beispielhaft eine Ansteuereinheit 160 auf, mittels welcher Signale erzeugt werden können, um die Betätigungseinheiten 140 anzusteuern. Die Ansteuereinheit 160 kann beispielsweise Teil eines größeren Betriebsrechners für die gesamte verfahrenstechnische Anlage 100 sein.

Diese Betätigungseinheiten 140 sind dabei jeweils, wie schon erwähnt, derart eingerichtet, dass sie bei nicht mehr ausreichender Versorgung mit Betriebsfluid bzw. Instrumentenluft, also beispielsweise bei Abfall eines Drucks der Instrumentenluft unterhalb eines bestimmten Mindestwerts, in einen sicheren Zustand übergehen bzw. einen solchen einnehmen.

In der Versorgungsleitung 135 ist nun eine als Absperrventil ausgebildete, aktiv betätigbare Absperreinrichtung 150 vorgesehen. Bei Betätigung dieses Absperrventils 150 wird die Versorgung mit Instrumentenluft in der Versorgungsleitung 135 stromabwärts des Absperrventils 150 - und damit auch an den Betätigungseinheiten 140 - unterbrochen. Dies führt dazu, dass die Versorgung der Betätigungseinheiten mit der Instrumentenluft aktiv zumindest so weit reduziert - hier sogar vollständig unterbrochen - wird, dass diese jeweils den sicheren Zustand einnehmen.

Es versteht sich, dass aufgrund der in der Versorgungsleitung 135 vorhandenen Instrumentenluft mit gewissem Druck mitunter eine gewisse Zeit vergehen kann, bis die Versorgung an den Steuer- und/oder Regeleinheiten hinreichend weit reduziert ist.

Zur schnellen und automatisierten Betätigung des Absperrventils 150 bei Bedarf ist beispielhaft eine Auslöseeinheit 170 vorgesehen. Hiermit kann beispielsweise eine Spannung an einen entsprechenden Aktor in dem Absperrventil 150 angelegt werden, um dieses zu schließen. Denkbar ist auch, dass das Absperrventil 150 und die Auslöseeinheit 170 hart-verdrahtet werden.

In Figur 2 ist schematisch ein Ablauf eines erfindungsgemäßen Verfahrens in einer bevorzugten Ausführungsform dargestellt, wie es beispielsweise mit der in Figur 1 gezeigten verfahrenstechnischen Anlage bzw. dem dort vorgesehenen Betätigungssystem durchgeführt werden kann.

In einem Schritt 200 kann der laufende Betrieb der verfahrenstechnischen Anlage, bei der die Betätigungseinheiten in vorgesehener Weise verwendet werden, beispielsweise auf etwaige Probleme wie einem ungewöhnlichen Verhalten des Betätigungssystem oder einer oder mehrerer der Betätigungseinheiten überwacht werden, was beispielsweise auf einen Hackerangriff oder andere, unerlaubte Eingriffe in die verfahrenstechnische Anlage hinweist.

Falls ein solcher Fall eintritt bzw. erkannt wird, kann in einem Schritt 210 eine Auslösung erfolgen, indem beispielsweise eine Spannung an das Absperrventil bzw. dessen Magnetspule angelegt wird, um dieses zu schließen. Dies führt in einem Schritt 220 dann dazu, dass die Betätigungseinheiten in einen sicheren Zustand übergehen bzw. diesen einnehmen, wie vorstehend schon erläutert, was zu Vermeidung oder zumindest Reduzierung von Schäden an der gesamten verfahrenstechnischen Anlage führt.

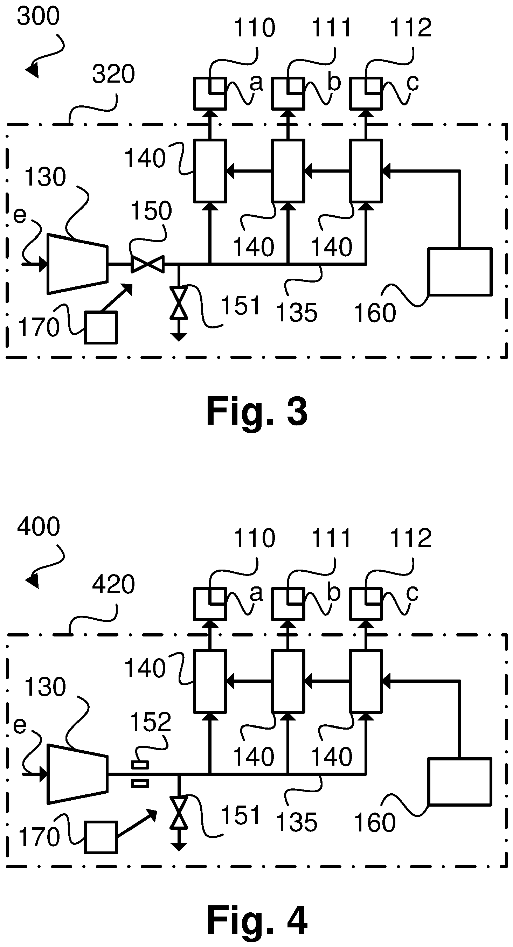

In Figur 3 ist schematisch eine erfindungsgemäße verfahrenstechnische Anlage 300 in einer weiteren bevorzugten Ausführungsform dargestellt. Die verfahrenstechnische Anlage 300 mit ihren Betätigungseinheiten 320 entspricht im Wesentlichen der verfahrenstechnischen Anlage 100 mit ihrem Betätigungssystem 120 gemäß Figur 1, sodass insoweit auf die dortigen Ausführungen verwiesen werden kann. Gleich Komponenten sind dabei mit gleichen Bezugszeichen bezeichnet.

Zusätzlich zu der als Absperrventil ausgebildeten, aktiv betätigbaren Absperreinrichtung 150 ist hier nun eine als Druckreduzierventil ausgebildete, aktiv betätigbare Druckreduziereinrichtung 151 an der Versorgungsleitung 135 vorgesehen. Bei Betätigung dieser Druckreduziereinrichtung 151 wird die Versorgung mit Instrumentenluft in der Versorgungsleitung 135 stromabwärts der Druckreduziereinrichtung 151 - und damit auch an den Betätigungseinheiten 140 - reduziert.

Dies führt dazu, dass - insbesondere in Kombination mit der gleichzeitigen Betätigung des Absperrventils 150 - die Versorgung der Betätigungseinheiten mit der Instrumentenluft aktiv besonders schnell so weit reduziert wird, dass diese jeweils den sicheren Zustand einnehmen.

Die Druckreduziereinrichtung 151 kann, wie auch das Absperrventil 150 bei Bedarf durch die Auslöseeinheit 170 beispielsweise automatisiert betätigt werden, denkbar ist aber auch eine manuelle Betätigung. Hiermit kann beispielsweise auch an einen entsprechenden Aktor in der Druckreduziereinrichtung 151 eine Spannung angelegt werden, um diese zu öffnen.

In Figur 4 ist schematisch eine erfindungsgemäße verfahrenstechnische Anlage 400 in einer weiteren bevorzugten Ausführungsform dargestellt. Die verfahrenstechnische Anlage 400 mit ihrem Betätigungseinheiten 420 entspricht im Wesentlichen der verfahrenstechnischen Anlage 300 mit ihrem Betätigungseinheiten 320 gemäß Figur 3, sodass insoweit auf die dortigen Ausführungen (bzw. entsprechend diejenigen zur Figur 1) verwiesen werden kann. Gleich Komponenten sind dabei mit gleichen Bezugszeichen bezeichnet.

Anstelle des Absperrventils ist hier in der Versorgungsleitung 135 eine Mengenbegrenzungseinrichtung 152 vorgesehen, bei der es sich beispielsweise um einen Reduzierring oder dergleichen handeln kann. Hiermit wird die in der Versorgungsleitung 135 verfügbare Menge der Instrumentenluft generell auf ein bestimmtes Maß beschränkt, sodass beispielsweise im Fall einer Betätigung der Druckreduziereinrichtung 151 deutlich mehr Betriebsfluid aus der Leitung 135 abströmt, als über den Verdichter 130 und die Mengenbegrenzungseinrichtung 152 nachströmen kann. Dadurch kann, wie schon bei Figur 3, schnell ein Zustand herbeigeführt werden, bei dem der Druck in der Versorgungsleitung 135 hinreichend weit abgesunken ist, sodass die Betätigungseinheiten 140 den sicheren Zustand einnehmen.

Im Vergleich zu dem Absperrventil oder allgemein einer Absperreinheit ist hierzu keine aktive Betätigung der Mengenbegrenzungseinrichtung 152 notwendig. Dadurch ist die Funktionsweise sicherer und einfacher, vor allem weil es im Vergleich zu dem Beispiel in Figur 3 nur ein aktiv zu betätigendes Ventil (nämlich Ventil 151) gibt. Damit kann im Vergleich zu dem Beispiel in Figur 3 mit zwei aktiv zu betätigenden Ventilen (dort Ventile 150 und 151) die Fehlerhäufigkeit reduziert werden. Insbesondere in Kombination mit der Druckreduziereinrichtung kann die Versorgung mit Instrumentenluft in dem Beispiel in Figur 4 aber dennoch sehr schnell reduziert werden.

## Patentansprüche

1. Verfahren zum Betreiben einer verfahrenstechnischen Anlage (100, 300, 400), bei der extern angesteuerte und mittels eines unter Druck stehenden Betriebsfluids (e) aktorisch betriebene Betätigungseinheiten (140) zum Steuern und/oder Regeln und/oder Überwachen von Prozessparametern (a, b, c) verwendet werden, die jeweils dazu eingerichtet sind, bei Ausbleiben einer hinreichenden Versorgung mit dem Betriebsfluid (e) einen sicheren Zustand einzunehmen, wobei mehrere der Betätigungseinheiten (140) über eine Versorgungsleitung (135) zwischen einer gemeinsamen Versorgungseinheit (130) und den mehreren Betätigungseinheiten (140) mit dem Betriebsfluid (e) versorgt werden, und wobei bei Bedarf die Versorgung der mehreren Betätigungseinheiten (140) mit dem Betriebsfluid (e) aktiv zumindest so weit reduziert wird, dass diese jeweils den sicheren Zustand einnehmen, **dadurch gekennzeichnet, dass**
die Versorgungsleitung (135) derart ausgebildet wird, dass eine maximal durch die Versorgungsleitung (135) führbare Menge an Betriebsfluid (e) einen Versorgungsbedarf der mehreren Betätigungseinheiten (140) um nicht mehr als einen vorgegebenen Wert übersteigt, wobei eine Mengenbegrenzungseinrichtung (152) in der Versorgungsleitung (135) vorgesehen wird, die derart ausgebildet ist, dass die maximal durch die Versorgungsleitung (135) führbare Menge an Betriebsfluid (e) den Versorgungsbedarf um nicht mehr als den vorgegebenen Wert übersteigt.

2. Verfahren nach Anspruch 1, wobei eine aktiv betätigbare Reduzier- oder Absperreinrichtung (150) in der Versorgungsleitung (135) vorgesehen wird, um bei Bedarf die Versorgung der mehreren Betätigungseinheiten (140) mit dem Betriebsfluid (e) aktiv zu reduzieren oder zu unterbinden.

3. Verfahren nach einem der vorstehenden Ansprüche, wobei eine aktiv betätigbare Druckreduziereinrichtung (151) an der Versorgungsleitung (135) vorgesehen wird, um bei Bedarf die Versorgung der mehreren Betätigungseinheiten (140) mit dem Betriebsfluid (e) aktiv zu reduzieren, so dass diese einen sicheren Zustand einnehmen.

4. Verfahren nach Anspruch 3 in Rückbezug auf Anspruch 2, wobei die aktiv betätigbare Druckreduziereinrichtung (151) an der Versorgungsleitung (135) stromabwärts der aktiv betätigbaren Absperreinrichtung (150) vorgesehen wird.

5. Verfahren nach Anspruch 3, wobei die aktiv betätigbare Druckreduziereinrichtung (151) an der Versorgungsleitung (135) stromabwärts der Mengenbegrenzungseinrichtung (152) vorgesehen wird.

6. Betätigungssystem (120, 320, 420) für eine verfahrenstechnische Anlage (100, 300, 400), mit mehreren extern ansteuerbaren und mittels eines unter Druck stehenden Betriebsfluids (e) aktorisch betreibbaren Betätigungseinheiten (140) zum Steuern und/oder Regeln und/oder Überwachen von Prozessparametern (a, b, c) der verfahrenstechnischen Anlage (100, 300, 400), die jeweils dazu eingerichtet sind, bei Ausbleiben einer hinreichenden Versorgung mit dem Betriebsfluid (e) einen sicheren Zustand einzunehmen, mit einer Versorgungseinheit (130) und einer Versorgungsleitung (135) zwischen der Versorgungseinheit (130) und den mehreren Betätigungseinheiten (140) zur Versorgung mit dem Betriebsfluid (e), wobei das Betätigungssystem (120, 320, 420) derart ausgebildet ist, dass bei Bedarf die Versorgung der mehreren Betätigungseinheiten (140) mit dem Betriebsfluid (e) aktiv zumindest so weit reduzierbar ist, dass diese jeweils den sicheren Zustand einnehmen,
**dadurch gekennzeichnet, dass**
die Versorgungsleitung (135) derart ausgebildet ist, dass eine maximal durch die Versorgungsleitung (135) führbare Menge an Betriebsfluid (e) einen Versorgungsbedarf der mehreren Betätigungseinheiten (140) um nicht mehr als einen vorgegebenen Wert übersteigt, wobei eine Mengenbegrenzungseinrichtung (152) in der Versorgungsleitung (135) vorgesehen ist, und die derart ausgebildet ist, dass die maximal durch die Versorgungsleitung (135) führbare Menge an Betriebsfluid (e) den Versorgungsbedarf um nicht mehr als den vorgegebenen Wert übersteigt..

7. Betätigungssystem (120, 320) nach Anspruch 6, mit einer aktiv betätigbaren Reduzier- oder Absperreinrichtung (150), die in der Versorgungsleitung (135) vorgesehen und dazu eingerichtet ist, bei Bedarf die Versorgung der mehreren Betätigungseinheiten (140) mit dem Betriebsfluid (e) aktiv zu reduzieren oder zu unterbinden.

8. Betätigungssystem (320, 420)) nach einem der Ansprüche 6 bis 7, mit einer aktiv betätigbaren Druckreduziereinrichtung (151), die an der Versorgungsleitung (135) vorgesehen und dazu eingerichtet ist, bei Bedarf die Versorgung der mehreren Betätigungseinheiten (140) mit dem Betriebsfluid (e) aktiv zu reduzieren.

9. Betätigungssystem nach Anspruch 8 in Rückbezug auf Anspruch 7, wobei die aktiv betätigbare Druckreduziereinrichtung an der Versorgungsleitung stromabwärts der aktiv betätigbaren Absperreinrichtung vorgesehen ist.

10. Betätigungssystem (420) nach Anspruch 8, wobei die aktiv betätigbare Druckreduziereinrichtung (151) an der Versorgungsleitung (135) stromabwärts der Mengenbegrenzungseinrichtung (152) vorgesehen ist.

11. Verfahrenstechnische Anlage (100, 300, 400) mit einem Betätigungssystem (120, 320, 420) nach einem der Ansprüche 6 bis 10.

## Claims

1. Method for operating a process engineering system (100, 300, 400), in which actuating units (140) which are externally driven and are actuated by means of a pressurized operating fluid (e) are used to control, in an open-loop and/or closed-loop manner, and/or monitor process parameters (a, b, c), which actuating units are in each case designed to assume a safe state in the absence of a sufficient supply of the operating fluid (e), a plurality of the actuating units (140) being supplied with the operating fluid (e) via a supply line (135) between a common supply unit (130) and the plurality of actuating units (140), and the supply of the operating fluid (e) to the plurality of actuating units (140) being actively reduced if necessary at least to such an extent that said actuating units in each case assume the safe state, **characterized in that**
the supply line (135) is designed in such a way that a maximum quantity of operating fluid (e) that can be conducted through the supply line (135) exceeds a supply requirement for the plurality of actuating units (140) by no more than a predetermined value,
a quantity limiting device (152) being provided in the supply line (135) and being designed in such a way that the maximum quantity of operating fluid (e) that can be conducted through the supply line (135) exceeds the supply requirement by no more than the predetermined value.

2. Method according to claim 1, wherein an actively actuable reducing or shut-off device (150) is provided in the supply line (135) in order to actively reduce or prevent the supply of the operating fluid (e) to the plurality of actuating units (140) if necessary.

3. Method according to any of the preceding claims, wherein an actively actuable pressure reducing device (151) is provided in the supply line (135) in order to actively reduce the supply of the operating fluid (e) to the plurality of actuating units (140) if necessary, so that said actuating units assume a safe state.

4. Method according to claim 3, referring back to claim 2, wherein the actively actuable pressure reducing device (151) is provided in the supply line (135) downstream of the actively actuable shut-off device (150).

5. Method according to claim 3, wherein the actively actuable pressure reducing device (151) is provided in the supply line (135) downstream of the quantity limiting device (152).

6. Actuating system (120, 320, 420) for a process engineering system (100, 300, 400), having a plurality of actuating units (140), which can be externally driven and can be actuated by means of a pressurized operating fluid (e), for controlling , in an open-loop and/or closed-loop manner, and/or monitoring process parameters (a, b, c) of the process engineering system (100, 300, 400), which actuating units are in each case designed to assume a safe state in the absence of a sufficient supply of the operating fluid (e), having a supply unit (130) and a supply line (135) between the supply unit (130) and the plurality of actuating units (140) for supplying the operating fluid (e), the actuating system (120, 320, 420) being designed in such a way that the supply of the operating fluid (e) to the plurality of actuating units (140) can be actively reduced if necessary at least to such an extent that said actuating units in each case assume the safe state, **characterized in that**
the supply line (135) is designed in such a way that a maximum quantity of operating fluid (e) that can be conducted through the supply line (135) exceeds a supply requirement of the plurality of actuating units (140) by no more than a predetermined value, a quantity limiting device (152) being provided in the supply line (135) and being designed in such a way that the maximum quantity of operating fluid (e) that can be conducted through the supply line (135) exceeds the supply requirement by no more than the predetermined value.

7. Actuating system (120, 320) according to claim 6, having an actively actuable reducing or shut-off device (150) which is provided in the supply line (135) and designed to actively reduce or prevent the supply of the operating fluid (e) to the plurality of actuating units (140) if necessary.

8. Actuating system (320, 420) according to either claim 6 or claim 7, having an actively actuable pressure reducing device (151) which is provided in the supply line (135) and is designed to actively reduce the supply of the operating fluid (e) to the plurality of actuating units (140) if necessary.

9. Actuating system according to claim 8, referring back to claim 7, wherein the actively actuable pressure reducing device is provided in the supply line downstream of the actively actuable shut-off device.

10. Actuating system (420) according to claim 8, wherein the actively actuable pressure reducing device (151) is provided in the supply line (135) downstream of the quantity limiting device (152).

11. Process engineering system (100, 300, 400) having an actuating system (120, 320, 420) according to any of claims 6 to 10.

## Revendications

1. Procédé permettant de faire fonctionner une installation d'ingénierie de processus (100, 300, 400) dans laquelle sont utilisées des unités d'actionnement (140) commandées de l'extérieur et actionnées par des actionneurs à l'aide d'un fluide de fonctionnement (e) sous pression, lesquelles unités d'actionnement sont destinées à commander et/ou réguler et/ou surveiller des paramètres de processus (a, b, c) et sont respectivement conçues pour adopter un état sécurisé en l'absence d'une alimentation suffisante en fluide de fonctionnement (e), dans lequel plusieurs des unités d'actionnement (140) sont alimentées en fluide de fonctionnement (e) par l'intermédiaire d'une conduite d'alimentation (135) située entre une unité d'alimentation (130) commune et les plusieurs unités d'actionnement (140), et dans lequel, en cas de besoin, l'alimentation des plusieurs unités d'actionnement (140) en fluide de fonctionnement (e) est réduite activement au moins jusqu'à ce que celles-ci adoptent respectivement l'état sécurisé, **caractérisé en ce que**
la conduite d'alimentation (135) est réalisée de telle sorte qu'une quantité maximale de fluide de fonctionnement (e) pouvant être guidée à travers la conduite d'alimentation (135) ne dépasse pas un besoin d'alimentation des plusieurs unités d'actionnement (140) de plus d'une valeur prédéfinie, dans lequel un dispositif de limitation de quantité (152) est prévu dans la conduite d'alimentation (135), lequel est réalisé de telle sorte que la quantité maximale de fluide de fonctionnement (e) pouvant être guidée à travers la conduite d'alimentation (135) ne dépasse pas le besoin en alimentation de plus de la valeur prédéfinie.

2. Procédé selon la revendication 1, dans lequel un dispositif de réduction ou d'arrêt (150) pouvant être actionné activement est prévu dans la conduite d'alimentation (135) afin de réduire activement ou d'empêcher, en cas de besoin, l'alimentation des plusieurs unités d'actionnement (140) en fluide de fonctionnement (e).

3. Procédé selon l'une des revendications précédentes, dans lequel un dispositif de réduction de pression (151) pouvant être actionné activement est prévu sur la conduite d'alimentation (135) afin de réduire activement, en cas de besoin, l'alimentation des plusieurs unités d'actionnement (140) en fluide de fonctionnement (e), de sorte qu'elles adoptent un état sécurisé.

4. Procédé selon la revendication 3, lorsqu'elle dépend de la revendication 2, dans lequel le dispositif de réduction de pression (151) pouvant être actionné activement est prévu sur la conduite d'alimentation (135) en aval du dispositif d'arrêt (150) pouvant être actionné activement.

5. Procédé selon la revendication 3, dans lequel le dispositif de réduction de pression (151) pouvant être actionné activement est prévu sur la conduite d'alimentation (135) en aval du dispositif de limitation de quantité (152).

6. Système d'actionnement (120, 320, 420) pour une installation d'ingénierie de processus (100, 300, 400), comportant plusieurs unités d'actionnement (140) pouvant être commandées de l'extérieur et pouvant être actionnées par des actionneurs à l'aide d'un fluide de fonctionnement (e) sous pression, lesquelles unités d'actionnement sont destinées à commander et/ou réguler et/ou surveiller des paramètres de processus (a, b, c) de l'installation d'ingénierie de processus (100, 300, 400) et sont respectivement conçues pour adopter un état sécurisé en l'absence d'une alimentation suffisante en fluide de fonctionnement (e), comportant une unité d'alimentation (130) et une conduite d'alimentation (135) située entre l'unité d'alimentation (130) et les plusieurs unités d'actionnement (140) pour l'alimentation en fluide de fonctionnement (e), dans lequel le système d'actionnement (120, 320, 420) est réalisé de telle sorte qu'en cas de besoin, l'alimentation des plusieurs unités d'actionnement (140) en fluide de fonctionnement (e) peut être réduite activement au moins jusqu'à ce que celles-ci adoptent respectivement l'état sécurisé, **caractérisé en ce que**
la conduite d'alimentation (135) est réalisée de telle sorte qu'une quantité maximale de fluide de fonctionnement (e) pouvant être guidée à travers la conduite d'alimentation (135) ne dépasse pas un besoin en alimentation des plusieurs unités d'actionnement (140) de plus d'une valeur prédéfinie, dans lequel un dispositif de limitation de quantité (152) est prévu dans la conduite d'alimentation (135) et est réalisé de telle sorte que la quantité maximale de fluide de fonctionnement (e) pouvant être guidée à travers la conduite d'alimentation (135) ne dépasse pas le besoin en alimentation de plus de la valeur prédéfinie.

7. Système d'actionnement (120, 320) selon la revendication 6, comportant un dispositif de réduction ou d'arrêt (150) pouvant être actionné activement, qui est prévu dans la conduite d'alimentation (135) et qui est conçu pour réduire activement ou pour empêcher, en cas de besoin, l'alimentation des plusieurs unités d'actionnement (140) en fluide de fonctionnement (e).

8. Système d'actionnement (320, 420) selon l'une des revendications 6 à 7, comportant un dispositif de réduction de pression (151) pouvant être actionné activement, prévu sur la conduite d'alimentation (135) et conçu pour réduire activement, en cas de besoin, l'alimentation des plusieurs unités d'actionnement (140) en fluide de fonctionnement (e).

9. Système d'actionnement selon la revendication 8, lorsqu'elle dépend de la revendication 7, dans lequel le dispositif de réduction de pression pouvant être actionné activement est prévu sur la conduite d'alimentation, en aval du dispositif d'arrêt pouvant être actionné activement.

10. Système d'actionnement (420) selon la revendication 8, dans lequel le dispositif de réduction de pression (151) pouvant être actionné activement est prévu sur la conduite d'alimentation (135), en aval du dispositif de limitation de quantité (152).

11. Installation d'ingénierie de processus (100, 300, 400) comportant un système d'actionnement (120, 320, 420) selon l'une des revendications 6 à 10.
